# EUROPÄISCHE PATENTSCHRIFT

(11) **EP 4 234 845 B1**
(45) Veröffentlichungstag und Bekanntmachung des Hinweises auf die Patenterteilung: **16.07.2025**
(21) Anmeldenummer: 23173875.8
(22) Anmeldetag: 13.08.2019
(51) Int. Cl.: E04G 21/04

(54) **AUTOBETONPUMPE**
VEHICLE-MOUNTED CONCRETE PUMP
POMPE À BÉTON AUTOMOTRICE

(30) Priorität: 04.09.2018 DE 102018214965
(43) Veröffentlichungstag der Anmeldung: 30.08.2023
(62) Teilanmeldung aus: 19755333.2
(73) Patentinhaber: Putzmeister Engineering GmbH, 72631 Aichtal (DE)
(72) Erfinder: Kasten, Knut, Dr., 73760 Ostfildern (DE)
(74) Vertreter: Patentanwälte Ruff, Wilhelm, Beier, Dauster & Partner mbB

(56) Entgegenhaltungen:
- EP-A1- 1 713 159
- EP-A1- 3 023 212
- CN-A- 108 382 180
- CN-U- 202 969 950
- DE-A1- 102010 046 615
- DE-A1- 102015 122 591
- CIFA: "CIFA HYBRID TECHNOLOGY", no. XP054979888, 11 April 2016 (2016-04-11), XP054979888, Retrieved from the Internet <URL:https://www.youtube.com/watch?v=JFW_KwvAsg4> [retrieved on 20191107]

## Beschreibung

Die Erfindung bezieht sich auf eine Autobetonpumpe.

Die EP 3 023 212 A1 von CIFA S.P.A. bzw. ein Youtube-Video von CIFA mit Titel "CIFA Hybrid Technology" offenbart ein Fahrzeug zum Ausbringen von Beton, bestehend aus einem Bewegungsmittel, beispielsweise einem Lastwagen, versehen mit einem Hauptmotor zum Bewegen des Lastwagens unter Verwendung einer Bewegungseinheit, einer Einheit zum Ausbringen von Beton ausgestattet mit einer Pumpvorrichtung, die so konfiguriert ist, dass sie den Beton entlang einer Leitung fördert. Das Fahrzeug umfasst eine Einheit zum Erzeugen und Einspeisen von elektrischer Energie, die so konfiguriert ist, um wahlweise eine oder mehrere von entweder der Bewegungseinheit das Lastwagens, der Betonausbringeinheit und der Pumpvorrichtung zu speisen.

Des Weiteren offenbart die DE 10 2010 046 615 A1 eine Vorrichtung zur Klimatisierung eines Kraftfahrzeugs. Das Kraftfahrzeug weist mindestens eine elektrische Maschine auf. Die Vorrichtung umfasst mindestens einen Fluidkreislauf. Im Fluidkreislauf sind mindestens ein Wärmetauscher, eine Pumpe und ein Thermospeicher angeordnet. Die elektrische Maschine bildet den Thermospeicher aus. Der Begriff "elektrische Maschine" umfasst hierbei alle bekannten Maschinen, mittels derer aus elektrischer Energie mechanische Energie erzeugbar ist, beispielsweise Asynchronmaschinen, Synchronmaschinen und Gleichstrommaschinen.

Außerdem offenbart die EP 1 713 159 A1 einen Variable-Drehzahl-synchron-elektrischen-Motor mit einem Rotor getaucht in eine Flüssigkeit besonders für Pumpen.

Weiter offenbart die CN 202 969 950 U eine Betonpumpvorrichtung mit Hybridantrieb.

Zudem offenbart die US 6 022 048 A ein Antriebsmotor-Montagemodul für ein Hybrid-Elektrofahrzeug und das Motor-Montagemodul in Kombination mit dem Hybrid-Elektrofahrzeug. Mehr spezifisch besteht das Antriebsmotor-Montagemodul aus einem Antriebsmotor, einer vorderen Motorhalterungshalterung, einer vorderen Chassishalterung, einem Chassisquerträger, zwei hinteren Motorhalterungen, zwei Querstreben, zwei vertikalen Kanälen und zwei Motormodule Lokalisierungs-Halterungen. Das gesamte Modul kann vor dem Einbau in das Fahrzeugchassis auf einer Hauptmontagelinie modular zusammengebaut werden. Das Montagemodul bringt den Antriebsmotor durch Dreipunkthalterungen mit dem Fahrchassis in Eingriff.

Des Weiteren offenbart die CN 108 382 180 A eine fahrzeugmontierte Betonpumpe mit ÖlStrom-Hybridantrieb vom parallelen Typ, die eine Fahrzeugchassiseinheit und eine Pumpeneinheit umfasst. Die Fahrzeugchassiseinheit umfasst eine Kupplung, ein Getriebe, ein Verteilergetriebe, eine Universalgetriebevorrichtung, eine Antriebsachse, ein Antriebssystem und ein Bremssystem. Die Pumpeinheit umfasst ein Pumpsystem, ein Schwenksystem, ein Rühr-/Kühl-/Schmier-/Reinigungssystem und ein Stützbeinsystem. Eine Pumpsystem-Hydraulikpumpe, eine Schwenksystem-Hydraulikpumpe, eine Rühr-/Kühl-/Schmier- /Reinigungssystem-Hydraulikpumpe und eine Stützbeinsystem-Hydraulikpumpe sind für das Pumpsystem, das Schwenksystem, das Rühr-/Kühl-/Schmier-/Reinigungssystem und das Stützbeinsystem entsprechend vorgesehen. Ein Dieselmotor und ein Motor/Generator sind über eine Kraftkopplungsvorrichtung parallel geschaltet, um eine Hybrid-Antriebsstruktur vom parallelen Typ zu bilden, und Energieeinsparung und Emissionsreduzierung der auf dem Fahrzeug montierten Betonpumpe werden durch die Wirkung eines Energiemanagementsystems erreicht.

### AUFGABE UND LÖSUNG

Der Erfindung liegt als Aufgabe die Bereitstellung einer Autobetonpumpe zugrunde, die verbesserte Eigenschaften aufweist.

Die Erfindung löst diese Aufgabe durch die Bereitstellung einer Autobetonpumpe mit den Merkmalen des Anspruchs 1. Vorteilhafte Weiterbildungen und/oder Ausgestaltungen der Erfindung sind in den abhängigen Ansprüchen beschrieben.

Die erfindungsgemäße Autobetonpumpe weist ein Betonpumpsystem, ein Hydraulikantriebspumpsystem, ein Verbrennungsantriebsmotorsystem und einen flüssigkeitsgekühlten, insbesondere wasser- oder ölgekühlten, Synchronantriebsmotor auf. Das Betonpumpsystem ist zur, insbesondere automatischen, Förderung beziehungsweise zum, insbesondere automatischen, Pumpen von Beton ausgebildet. Das Hydraulikantriebspumpsystem ist zum, insbesondere automatischen und/oder hydraulischen, Antrieb des Betonpumpsystems ausgebildet. Des Weiteren weist das Hydraulikantriebspumpsystem eine Hydraulikpumpenantriebswelle auf. Das Verbrennungsantriebsmotorsystem ist zum, insbesondere automatischen und/oder mechanischen, Antrieb der Hydraulikpumpenantriebswelle des Hydraulikantriebspumpsystems ausgebildet. Der flüssigkeitsgekühlte Synchronantriebsmotor ist zum, insbesondere automatischen und/oder mechanischen, Antrieb der, insbesondere derselben, Hydraulikpumpenantriebswelle des Hydraulikantriebspumpsystems ausgebildet.

Der flüssigkeitsgekühlte Synchronantriebsmotor kann ein relativ kleines Volumen und/oder eine relativ geringe Masse beziehungsweise ein relativ geringes Gewicht aufweisen. Somit kann der flüssigkeitsgekühlte Synchronantriebsmotor ermöglichen, dass der flüssigkeitsgekühlte Synchronantriebsmotor und das Verbrennungsantriebsmotorsystem die, insbesondere dieselbe, Hydraulikpumpenantriebswelle des Hydraulikantriebspumpsystems antreiben können. Insbesondere kann die Autobetonpumpe nur ein einziges Hydraulikantriebspumpsystem aufweisen, insbesondere aufweisend nur eine einzige Hydraulikpumpenantriebswelle. In anderen Worten: die Autobetonpumpe kann oder braucht nicht eine Mehrzahl von Hydraulikantriebspumpsystemen aufweisend eine Mehrzahl von Hydraulikpumpenantriebswellen aufweisen. Somit kann der flüssigkeitsgekühlte Synchronantriebsmotor eine relativ kompakte und/oder relativ leichte Bauweise der Autobetonpumpe, insbesondere mit relativ wenigen Komponenten, ermöglichen. Somit kann die Autobetonpumpe erstmalig ein effektives Arbeiten, insbesondere eine effektive Förderung von Beton, mit relativ geringer oder sogar mit Null Abgas-Emission und/oder mit relativ geringerem Geräuschpegel beziehungsweise Lautstärkepegel ermöglichen. Insbesondere kann somit die Autobetonpumpe auf einer innerstädtischen Baustelle eingesetzt werden.

Insbesondere kann die Autobetonpumpe als fahrbare, insbesondere selbstfahrende, Betonpumpe bezeichnet werden.

Zusätzlich oder alternativ kann das Betonpumpensystem mindestens eine Kolbenpumpe, insbesondere eine Doppelkolbenpumpe, zur, insbesondere automatischen, Förderung von Beton aufweisen.

Weiter zusätzlich oder alternativ kann das Hydraulikantriebspumpsystem eine Anzahl von Hydraulikantriebspumpen zum, insbesondere automatischen und/oder hydraulischen, Antrieb des Betonpumpsystems aufweisen. Die Hydraulikpumpenantriebswelle kann zum, insbesondere automatischen und/oder mechanischen, Antrieb der Anzahl von Hydraulikantriebspumpen ausgebildet sein. Insbesondere kann die Anzahl von Hydraulikantriebspumpen mit der Hydraulikpumpenantriebswelle mechanisch starr verbunden sein, insbesondere auf der Hydraulikpumpenantriebswelle sitzen. Zusätzlich oder alternativ kann das Hydraulikantriebspumpsystem von dem Betonpumpsystem verschieden sein.

Weiter zusätzlich oder alternativ kann das Verbrennungsantriebsmotorsystem einen, insbesondere nur einen einzigen, Verbrennungsantriebsmotor, insbesondere einen Dieselmotor, zum, insbesondere automatischen und/oder mechanischen, Antrieb der Hydraulikpumpenantriebswelle des Hydraulikantriebspumpsystems aufweisen. Zusätzlich kann das Verbrennungsantriebsmotorsystem ein Fahrzeuggetriebe aufweisen. Weiter zusätzlich oder alternativ kann das Verbrennungsantriebsmotorsystem von dem Hydraulikantriebspumpsystem verschieden sein.

Weiter zusätzlich oder alternativ kann der flüssigkeitsgekühlte Synchronantriebsmotor einen, insbesondere nur einen einzigen, Synchronmotor zum, insbesondere automatischen und/oder mechanischen, Antrieb der Hydraulikpumpenantriebswelle des Hydraulikantriebspumpsystems aufweisen. Insbesondere kann der Synchronmotor mit Reluktanzeffekt sein. Zusätzlich oder alternativ kann der Synchronmotor eine Einphasen- oder Drehstrom-Synchronmaschine im Motorbetrieb sein, bei der ein konstant magnetisierter Läufer (Rotor) synchron von einem bewegten magnetischen Drehfeld im Stator mitgenommen werden kann. Zusätzlich kann der flüssigkeitsgekühlte Synchronantriebsmotor eine Flüssigkeitskühlung, insbesondere eine Wasser- oder Ölkühlung, zu der beziehungsweise für die Kühlung des Synchronmotors aufweisen. Die Flüssigkeitskühlung kann ein Kühlsystem, insbesondere ein Kühlkreislaufsystem, bezeichnen, bei dem das primär wärmeabführende Kühlmittel eine Flüssigkeit, insbesondere Wasser oder Öl, sein kann. Weiter zusätzlich oder alternativ kann der flüssigkeitsgekühlte Synchronantriebsmotor von dem Verbrennungsantriebsmotorsystem und/oder von dem Hydraulikantriebspumpsystem verschieden sein.

Weiter zusätzlich oder alternativ kann die Autobetonpumpe dazu ausgebildet sein, dass, insbesondere zu einem Zeitpunkt, entweder, insbesondere ausschließlich, das Verbrennungsantriebsmotorsystem oder, insbesondere ausschließlich, der flüssigkeitsgekühlte Synchronantriebsmotor oder, insbesondere gleichzeitig, das Verbrennungsantriebsmotorsystem und der flüssigkeitsgekühlte Synchronantriebsmotor die Hydraulikpumpenantriebswelle des Hydraulikantriebspumpsystems antreiben kann/können. Zusätzlich kann die Autobetonpumpe zum, insbesondere automatischen, Umschalten beziehungsweise Umstellen zwischen dem Verbrennungsantrieb und/oder dem Synchronantrieb beziehungsweise Elektrobetrieb und/oder dem Hybridbetrieb ausgebildet sein. Weiter zusätzlich oder alternativ kann die Autobetonpumpe als Parallel-Hybrid-Autobetonpumpe bezeichnet werden.

Die Autobetonpumpe weist einen elektrischen Energiespeicher, insbesondere einen Akkumulator, auf. Der elektrische Energiespeicher ist, insbesondere durch beziehungsweise über einen, insbesondere elektrischen, Konverter beziehungsweise Umsetzer, mit dem flüssigkeitsgekühlten Synchronantriebsmotor elektrisch verbunden. Des Weiteren ist der elektrische Energiespeicher zur Abgabe elektrischer Leistung beziehungsweise elektrischer Energie an den flüssigkeitsgekühlten Synchronantriebsmotor ausgebildet. Dies ermöglicht die Autobetonpumpe bei Nicht-Vorhandensein eines elektrischen Baustellennetzanschlusses mindestens teilweise elektrisch zu betreiben. Wird mehr Leistung benötigt, kann das Verbrennungsantriebsmotorsystem zugeschaltet werden. Die Autobetonpumpe ist dazu ausgebildet, den elektrischen Energiespeicher durch den flüssigkeitsgekühlten Synchronantriebsmotor als Generator von dem Verbrennungsantriebsmotorsystem aufzuladen, insbesondere falls das Verbrennungsantriebsmotorsystem mehr Leistung beziehungsweise Energie liefern kann, als von dem Hydraulikantriebspumpsystem, insbesondere temporär, benötigt.

Die Autobetonpumpe weist einen Aufbau und einen, insbesondere von dem Aufbau verschiedenen, Fahrzeugrahmen auf. Der Aufbau trägt das Betonpumpsystem. Der Fahrzeugrahmen trägt den Aufbau. Der flüssigkeitsgekühlte Synchronantriebsmotor ist teilweise zwischen Hauptlängsträgern des Aufbaus und/oder des Fahrzeugrahmens räumlich angeordnet. Dies ermöglicht eine optimale Nutzung des Bauraums. Anders formuliert: der flüssigkeitsgekühlte Synchronantriebsmotor kann oder braucht nicht auf dem Aufbau räumlich angeordnet sein beziehungsweise der Aufbau kann oder braucht nicht den flüssigkeitsgekühlten Synchronantriebsmotor tragen. Somit kann oder braucht der flüssigkeitsgekühlte Synchronantriebsmotor keinen Bauraum beziehungsweise keine Fläche auf dem Aufbau beanspruchen. Insbesondere kann der Aufbau als Pritsche, insbesondere im rechten oder linken Bereich der Autobetonpumpe, bezeichnet werden. Zusätzlich oder alternativ kann der Fahrzeugrahmen als Fahrzeugchassis bezeichnet werden. Weiter zusätzlich oder alternativ kann der Fahrzeugrahmen ein Lastkraftwagenrahmen sein beziehungsweise die Autobetonpumpe kann auf einem Lastkraftwagen aufgebaut sein. Weiter zusätzlich oder alternativ kann der flüssigkeitsgekühlte Synchronantriebsmotor vollständig zwischen Hauptlängsträgern des Aufbaus und/oder des Fahrzeugrahmens räumlich angeordnet sein oder in vertikaler Richtung nach unten und/oder nach oben über die Hauptlängsträger sich hinauserstrecken.

In einer Weiterbildung der Erfindung weist die Autobetonpumpe mindestens eine Fahrantriebsachse auf. Das Verbrennungsantriebsmotorsystem ist zum, insbesondere automatischen und/oder mechanischen, Antrieb der mindestens einen Fahrantriebsachse ausgebildet. Somit kann das Verbrennungsantriebsmotorsystem sowohl Fahrbetrieb als auch Pumpbetrieb der Autobetonpumpe gewährleisten. Insbesondere kann die Autobetonpumpe dazu ausgebildet sein, dass, insbesondere zu einem Zeitpunkt, das Verbrennungsantriebsmotorsystem entweder, insbesondere ausschließlich, die mindestens eine Fahrantriebsachse oder, insbesondere ausschließlich, die Hydraulikpumpenantriebswelle des Hydraulikantriebspumpsystems antreiben kann. Zusätzlich kann die Autobetonpumpe zum, insbesondere automatischen, Umschalten beziehungsweise Umstellen zwischen dem Fahrbetrieb und dem Pumpbetrieb ausgebildet sein.

In einer Ausgestaltung der Erfindung weist die Autobetonpumpe ein Verteilergetriebe auf. Das Verteilergetriebe ist dazu ausgebildet, insbesondere zu einem Zeitpunkt, das Verbrennungsantriebsmotorsystem entweder mit, insbesondere ausschließlich, der mindestens einen Fahrantriebsachse oder mit, insbesondere ausschließlich, der Hydraulikpumpenantriebswelle des Hydraulikantriebspumpsystems, insbesondere automatisch und/oder mechanisch, zu verbinden.

In einer Ausgestaltung der Erfindung ist das Verbrennungsantriebsmotorsystem mit dem Verteilergetriebe mechanisch verbunden, insbesondere mittels einer Kardanwelle, insbesondere ausschließlich mittels der Kardanwelle. Dies ermöglicht eine relativ einfache Verbindung, insbesondere mit relativ wenigen Komponenten. Insbesondere kann oder braucht das Verbrennungsantriebsmotorsystem mit dem Verteilergetriebe nicht hydraulisch verbunden sein.

In einer Ausgestaltung der Erfindung weist das Hydraulikantriebspumpsystem eine, insbesondere die, Anzahl von Hydraulikantriebspumpen auf. Das Verteilergetriebe weist eine Antriebsseite und eine gegenüberliegende beziehungsweise abgewandte Abtriebsseite auf. Das Verbrennungsantriebsmotorsystem und der flüssigkeitsgekühlte Synchronantriebsmotor sind, insbesondere vollständig, auf der Antriebsseite räumlich angeordnet. Des Weiteren ist die Anzahl von Hydraulikantriebspumpen, insbesondere vollständig, auf der Abtriebsseite räumlich angeordnet. Dies ermöglicht eine optimale Nutzung des Bauraums. Insbesondere kann oder braucht keine Hydraulikantriebspumpe auf der Antriebsseite räumlich angeordnet sein. Zusätzlich oder alternativ kann die Fahrantriebsachse auf der Abtriebsseite räumlich angeordnet sein.

In einer Ausgestaltung der Erfindung ist der flüssigkeitsgekühlte Synchronantriebsmotor mit der Hydraulikpumpenantriebswelle des Hydraulikantriebspumpsystems durch beziehungsweise über das Verteilergetriebe, insbesondere hindurch und/oder mechanisch, verbunden, insbesondere an das Verteilergetriebe direkt beziehungsweise unmittelbar angeflanscht. Dies ermöglicht das Verteilgetriebe zum Verteilen der mechanischen Energie zweier Antriebe, nämlich des Verbrennungsantriebsmotorsystems und des flüssigkeitsgekühlten Synchronantriebsmotors, zu nutzen. Insbesondere kann die Autobetonpumpe zum, insbesondere automatischen, Umschalten beziehungsweise Umstellen zwischen dem Verbrennungsantrieb und/oder dem Synchronantrieb und/oder dem Hybridbetrieb durch beziehungsweise über das Verteilergetriebe ausgebildet sein. Zusätzlich oder alternativ kann die Hydraulikpumpenantriebswelle des Hydraulikantriebspumpsystems sich durch das Verteilergetriebe hindurch, insbesondere von der Abtriebsseite zu der Antriebsseite, erstrecken. Weiter zusätzlich oder alternativ kann der flüssigkeitsgekühlte Synchronantriebsmotor auf der gleichen Seite wie das Verbrennungsantriebsmotorsystem und/oder auf der Antriebsseite an das Verteilergetriebe angeflanscht sein.

In einer Weiterbildung der Erfindung ist der flüssigkeitsgekühlte Synchronantriebsmotor mit der Hydraulikpumpenantriebswelle des Hydraulikantriebspumpsystems mechanisch starr verbunden. Der flüssigkeitsgekühlte Synchronantriebsmotor sitzt auf der Hydraulikpumpenantriebswelle. Dies ermöglicht eine relativ einfache Verbindung, insbesondere mit relativ wenigen Komponenten. Insbesondere kann der flüssigkeitsgekühlte Synchronantriebsmotor ohne oder braucht nicht durch beziehungsweise über eine trennbare Kupplung oder einen Freilauf mit der Hydraulikpumpenantriebswelle des Hydraulikantriebspumpsystems und/oder mit dem Verbrennungsantriebsmotorsystem verbunden sein. Zusätzlich oder alternativ kann der flüssigkeitsgekühlte Synchronantriebsmotor zum leeren Mitlaufen beziehungsweise passiven Mitdrehen, insbesondere im Verbrennungsantrieb, ausgebildet sein.

In einer Weiterbildung der Erfindung ist der flüssigkeitsgekühlte Synchronantriebsmotor für eine elektrische Nennleistung von mindestens 60 Kilowatt (kW), insbesondere von mindestens 80 kW, ausgebildet. Zusätzlich oder alternativ weist der flüssigkeitsgekühlte Synchronantriebsmotor eine elektrische Nennleistungsdichte von mindestens 0,4 Kilowatt pro Kilogramm (kW/kg), insbesondere von mindestens 0,5 kW/kg, auf. Dies kann ermöglichen, dass der flüssigkeitsgekühlte Synchronantriebsmotor die volle Funktionalität der Autobetonpumpe, insbesondere des Hydraulikantriebspumpsystems und somit des Betonpumpsystems, abdecken und sowohl für Vollast- als auch Teillastbetrieb ausgelegt sein kann. Insbesondere kann die elektrische Nennleistung eine Dauerleistung bezeichnen, wobei die Dauerleistung des flüssigkeitsgekühlten Synchronantriebsmotors die höchste Leistung sein kann, die bei einem bestimmungsgemäßen Betrieb ohne zeitliche Einschränkung erbracht werden und eine Lebensdauer und Sicherheit des flüssigkeitsgekühlte Synchronantriebsmotors nicht beeinträchtigen kann. Zusätzlich oder alternativ kann die elektrische Nennleistung durch beziehungsweise über P6 = √3 x I x U für Drehstrom (I: Strom, U: Spannung) definiert sein.

In einer Weiterbildung der Erfindung weist die Autobetonpumpe einen Elektrizitätsnetzanschluss auf. Der Elektrizitätsnetzanschluss ist, insbesondere durch beziehungsweise über einen, insbesondere den und/oder elektrischen, Konverter beziehungsweise Umsetzer, mit dem flüssigkeitsgekühlten Synchronantriebsmotor elektrisch verbunden. Des Weiteren ist der Elektrizitätsnetzanschluss zum elektrischen Anschluss an einen elektrischen Baustellennetzanschluss, insbesondere eines Baustromverteilerkastens und/oder eines Drehstromnetzes, ausgebildet. Dies ermöglicht den relativ hohen Leistungsbedarf der Autobetonpumpe, insbesondere des flüssigkeitsgekühlten Synchronantriebsmotors, durch beziehungsweise über den Baustellenstrom abzudecken. Wird mehr Leistung benötigt, kann das Verbrennungsantriebsmotorsystem zugeschaltet werden. Insbesondere kann der Elektrizitätsnetzanschluss zur Abgabe elektrischer Leistung beziehungsweise elektrischer Energie an den flüssigkeitsgekühlten Synchronantriebsmotor ausgebildet sein. Zusätzlich oder alternativ kann der Elektrizitätsnetzanschluss einen Netzstecker, insbesondere einen Drehstromsteckverbinder, aufweisen. Weiter zusätzlich oder alternativ kann die Autobetonpumpe, insbesondere können die elektrischen Komponenten, derart ausgebildet beziehungsweise konzipiert sein, dass der Pumpenfahrer selbst den elektrischen Anschluss herstellen kann, insbesondere den Netzstecker in eine korrespondierende Buchse beziehungsweise Dose des Baustellennetzanschlusses einstecken kann. Dies kann ermöglichen, dass nicht extra ein Elektriker zum elektrischen Anschluss der Autobetonpumpe bestellt werden braucht oder muss.

In einer Ausgestaltung der Erfindung ist der elektrische Energiespeicher zur Aufnahme von dem flüssigkeitsgekühlten Synchronantriebsmotor, insbesondere temporär beziehungsweise zu einem ersten Zeitpunkt, nicht benötigter beziehungsweise überschüssiger elektrischer Leistung von beziehungsweise mit dem Elektrizitätsnetzanschluss, insbesondere durch beziehungsweise über einen, insbesondere den und/oder elektrischen, Konverter beziehungsweise Umsetzer, elektrisch verbunden und ausgebildet. Des Weiteren ist der elektrische Energiespeicher zur Abgabe von dem flüssigkeitsgekühlten Synchronantriebsmotor, insbesondere temporär beziehungsweise zu einem von dem ersten verschiedenen, zweiten Zeitpunkt, benötigter elektrischer Leistung beziehungsweise elektrischer Energie zusätzlich zur elektrischen Leistung von dem Elektrizitätsnetzanschluss ausgebildet. Typischerweise stellt der elektrische Baustellennetzanschluss nur eine begrenzte elektrische Leistung bereit beziehungsweise ist auf eine bestimmte elektrische Leistungsbelastung begrenzt. Die Autobetonpumpe, insbesondere der elektrische Energiespeicher, ermöglicht, dass dem flüssigkeitsgekühlten Synchronantriebsmotor mindestens temporär beziehungsweise zeitweise mehr elektrische Leistung zur Verfügung steht als von dem elektrischen Baustellennetzanschluss bereitgestellt. Insbesondere können einen, insbesondere kurzzeitigen, relativ hohen Leistungsbedarf beziehungsweise eine Leistungsspitze des flüssigkeitsgekühlten Synchronantriebsmotors der Elektrizitätsnetzanschluss beziehungsweise der elektrische Baustellennetzanschluss und zusätzlich der elektrische Energiespeicher decken, insbesondere gleichzeitig. Zu Zeitpunkten mit relativ geringem Leistungsbedarf kann der elektrische Energiespeicher die nicht benötigte elektrische Leistung des Elektrizitätsnetzanschlusses aufnehmen. In anderen Worten: bei Überlast kann der elektrische Energiespeicher angezapft werden, bei Leistungsreserve kann der elektrische Energiespeicher aufgeladen werden.

In einer Weiterbildung der Erfindung weist die Autobetonpumpe einen Betonverteilermast auf. Der Betonverteilermast ist zur Verteilung von, insbesondere von dem Betonpumpsystem, gefördertem beziehungsweise gepumptem Beton ausgebildet. Das Hydraulikantriebspumpsystem ist zum Antrieb des Betonverteilermasts ausgebildet.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Seitenansicht einer erfindungsgemäßen Autobetonpumpe,
- Fig. 2: eine Draufsicht auf einen Aufbau und einen Fahrzeugrahmen in einem in Fig. 1 gestrichelt markierten Einbaubereich der Autobetonpumpe der Fig. 1,
- Fig. 3: einen Schaltplan der Autobetonpumpe der Fig. 1, und
- Fig. 4: einen weiteren Schaltplan der Autobetonpumpe der Fig. 1.

### DETAILLIERTE BESCHREIBUNG DER AUSFÜHRUNGSBEISPIELE

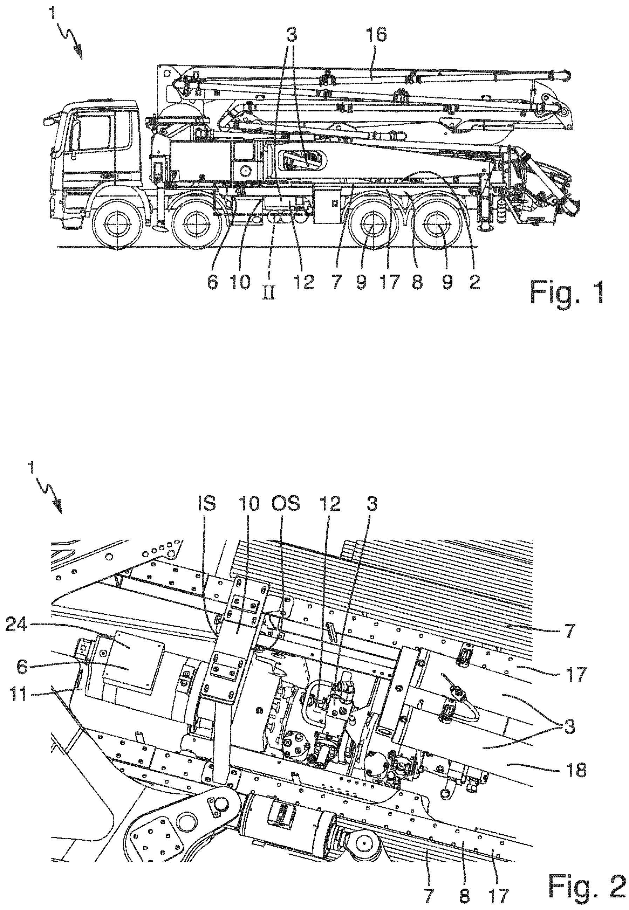

Fig. 1 bis 4 zeigen eine erfindungsgemäße Autobetonpumpe 1. Die Autobetonpumpe 1 weist ein Betonpumpsystem 2, ein Hydraulikantriebspumpsystem 3, ein Verbrennungsantriebsmotorsystem 5 und einen flüssigkeitsgekühlten Synchronantriebsmotor 6 auf. Das Betonpumpsystem 2 ist zur Förderung von Beton ausgebildet. Das Hydraulikantriebspumpsystem 3 ist zum Antrieb des Betonpumpsystems 2 ausgebildet. Des Weiteren weist das Hydraulikantriebspumpsystem 3 eine Hydraulikpumpenantriebswelle 4 auf. Das Verbrennungsantriebsmotorsystem 5 ist zum Antrieb der Hydraulikpumpenantriebswelle 4 des Hydraulikantriebspumpsystems 3 ausgebildet. Der flüssigkeitsgekühlte Synchronantriebsmotor 6 ist zum Antrieb der Hydraulikpumpenantriebswelle 4 des Hydraulikantriebspumpsystems 3 ausgebildet.

Im gezeigten Ausführungsbeispiel weist das Betonpumpensystem 2 mindestens eine Kolbenpumpe, insbesondere eine Doppelkolbenpumpe, zur Förderung von Beton auf. Außerdem weist im gezeigten Ausführungsbeispiel das Hydraulikantriebspumpsystem 3 mindestens einen Antriebszylinder 18, insbesondere zwei Antriebszylinder 18, und mindestens einen Antriebskolben, insbesondere zwei Antriebskolben, auf, wie in Fig. 2 gezeigt. Der mindestens eine Antriebskolben ist zum Antrieb der mindestens einen Kolbenpumpe ausgebildet. Die Hydraulikpumpenantriebswelle 4 ist zum Antrieb des mindestens einen Antriebskolbens ausgebildet.

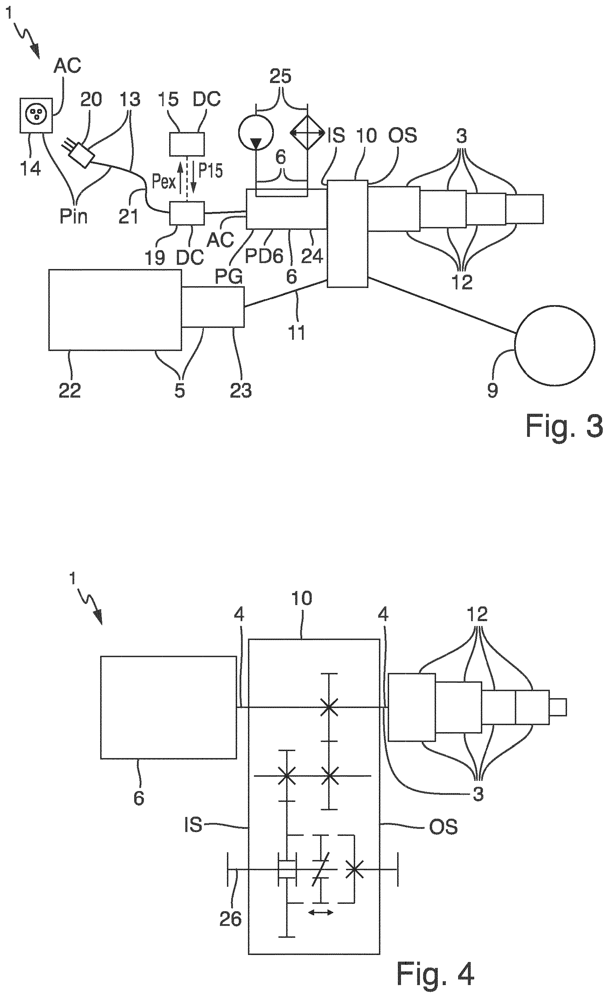

Weiter weist das Verbrennungsantriebsmotorsystem 5 einen Verbrennungsantriebsmotor 22 zum Antrieb der Hydraulikpumpenantriebswelle 4 des Hydraulikantriebspumpsystems 3 auf, wie in Fig. 3 gezeigt. Zusätzlich weist das Verbrennungsantriebsmotorsystem 5 ein Fahrzeuggetriebe 23 auf.

Zudem weist der flüssigkeitsgekühlte Synchronantriebsmotor 6 einen Synchronmotor 24 zum Antrieb der Hydraulikpumpenantriebswelle 4 des Hydraulikantriebspumpsystems 3 auf, wie in Fig. 2 gezeigt. Zusätzlich weist der flüssigkeitsgekühlte Synchronantriebsmotor 6 eine Flüssigkeitskühlung 25 zu der Kühlung des Synchronmotors 24 auf, wie in Fig. 3 gezeigt.

Des Weiteren weist die Autobetonpumpe 2 einen Betonverteilermast 16 auf, wie in Fig. 1 gezeigt. Der Betonverteilermast 16 ist zur Verteilung von gefördertem Beton ausgebildet. Das Hydraulikantriebspumpsystem 3 ist zum Antrieb des Betonverteilermasts 16 ausgebildet. Außerdem weist die Autobetonpumpe einen Aufbau 7 und einen Fahrzeugrahmen 8 auf, wie in Fig. 2 gezeigt. Der Aufbau 7 trägt das Betonpumpsystem 2. Der Fahrzeugrahmen 8 trägt den Aufbau 7. Der flüssigkeitsgekühlte Synchronantriebsmotor 6, insbesondere der Synchronmotor 24, ist zwischen Hauptlängsträgern 17 des Fahrzeugrahmens 8 räumlich angeordnet. In alternativen Ausführungsbeispielen kann der flüssigkeitsgekühlte Synchronantriebsmotor zusätzlich oder alternativ zwischen Hauptlängsträgern des Aufbaus räumlich angeordnet sein.

Im gezeigten Ausführungsbeispiel trägt der Aufbau 7 zusätzlich den Betonverteilermast 16. Weiter ist im gezeigten Ausführungsbeispiel die Hydraulikpumpenantriebswelle 4 des Hydraulikantriebspumpsystems 3 zwischen den Hauptlängsträgern 17 des Fahrzeugrahmens 8 räumlich angeordnet.

Zudem weist die Autobetonpumpe 1 mindestens eine Fahrantriebsachse 9 auf. Das Verbrennungsantriebsmotorsystem 5, insbesondere der Verbrennungsantriebsmotor 22, ist zum Antrieb der mindestens einen Fahrantriebsachse 9 ausgebildet, wie in Fig. 3 gezeigt.

Im gezeigten Ausführungsbeispiel weist die Autobetonpumpe 1 zwei Fahrantriebsachsen 9 auf. In alternativen Ausführungsbeispielen kann die Autobetonpumpe nur eine einzige Fahrantriebsachse oder mindestens drei Fahrantriebsachsen aufweisen. Des Weiteren ist im gezeigten Ausführungsbeispiel die mindestens eine Fahrantriebsachse 9 eine Hinterachse.

Außerdem weist die Autobetonpumpe 1 ein Verteilergetriebe 10 auf. Das Verteilergetriebe 10 ist dazu ausgebildet, das Verbrennungsantriebsmotorsystem 5 entweder mit der mindestens einen Fahrantriebsachse 9 oder mit der Hydraulikpumpenantriebswelle 4 des Hydraulikantriebspumpsystems 3 zu verbinden, wie in Fig. 4 gezeigt.

Im gezeigten Ausführungsbeispiel ist das Verteilergetriebe 10 zwischen den Hauptlängsträgern 17 des Fahrzeugrahmens 8 räumlich angeordnet.

Im Detail ist das Verbrennungsantriebsmotorsystem 5, insbesondere das Fahrzeuggetriebe 23, mit dem Verteilergetriebe 10 mechanisch verbunden, insbesondere mittels einer Kardanwelle 11.

Weiter weist das Hydraulikantriebspumpsystem 3 eine Anzahl von Hydraulikantriebspumpen 12 auf. Das Verteilergetriebe 10 weist eine Antriebsseite IS und eine gegenüberliegende Abtriebsseite OS auf. Das Verbrennungsantriebsmotorsystem 5, insbesondere der Verbrennungsantriebsmotor 22 und das Fahrzeuggetriebe 23, und der flüssigkeitsgekühlte Synchronantriebsmotor 6, insbesondere der Synchronmotor 24, sind auf der Antriebsseite IS räumlich angeordnet. Zudem ist die Anzahl von Hydraulikantriebspumpen 12 auf der Abtriebsseite OS räumlich angeordnet, insbesondere an das Verteilergetriebe 10 direkt angeflanscht.

Im gezeigten Ausführungsbeispiel weist das Hydraulikantriebspumpsystem 3 vier Hydraulikantriebspumpen 12 auf. In alternativen Ausführungsbeispielen kann das Hydraulikantriebspumpsystem nur eine einzige Hydraulikantriebspumpe oder zwei, drei oder mindestens fünf Hydraulikantriebspumpen aufweisen. Des Weiteren ist im gezeigten Ausführungsbeispiel die mindestens eine Fahrantriebsachse 9 auf der Abtriebsseite OS räumlich angeordnet. Außerdem ist im gezeigten Ausführungsbeispiel die Anzahl von Hydraulikantriebspumpen 12 zwischen den Hauptlängsträgern 17 des Fahrzeugrahmens 8 räumlich angeordnet. Weiter kann in alternativen Ausführungsbeispielen mindestens eine der Anzahl von Hydraulikantriebspumpen auf der Antriebsseite räumlich angeordnet sein. Insbesondere kann der flüssigkeitsgekühlte Synchronantriebsmotor, insbesondere der Synchronmotor, insbesondere mit einem Durchtrieb, zwischen der antriebsseitig angeordneten Hydraulikantriebspumpe und dem Verteilergetriebe angeordnet sein.

Im Detail ist die Anzahl von Hydraulikantriebspumpen 12 zum Antrieb des Betonpumpsystems 2, insbesondere des mindestens einen Antriebskolbens, ausgebildet. Die Hydraulikpumpenantriebswelle 4 ist zum Antrieb der Anzahl von Hydraulikantriebspumpen 12 ausgebildet. Im gezeigten Ausführungsbeispiel ist die Anzahl von Hydraulikantriebspumpen 12 mit der Hydraulikpumpenantriebswelle 4 mechanisch starr verbunden, insbesondere sitzt die Anzahl von Hydraulikantriebspumpen 12 auf der Hydraulikpumpenantriebswelle 4.

Zudem ist der flüssigkeitsgekühlte Synchronantriebsmotor 6, insbesondere der Synchronmotor 24, mit der Hydraulikpumpenantriebswelle 4 des Hydraulikantriebspumpsystems 3 durch das Verteilergetriebe 10 verbunden, insbesondere an das Verteilergetriebe 10 direkt angeflanscht.

Des Weiteren ist der flüssigkeitsgekühlte Synchronantriebsmotor 6, insbesondere der Synchronmotor 24, mit der Hydraulikpumpenantriebswelle 4 des Hydraulikantriebspumpsystems 3 mechanisch starr verbunden, wobei der flüssigkeitsgekühlte Synchronantriebsmotor 6, insbesondere der Synchronmotor 24, auf der Hydraulikpumpenantriebswelle 4 sitzt.

Im Detail erstreckt die Hydraulikpumpenantriebswelle 4 des Hydraulikantriebspumpsystems 3 sich durch das Verteilergetriebe 10 hindurch, insbesondere von der Abtriebsseite OS zu der Antriebsseite IS.

Außerdem ist der flüssigkeitsgekühlte Synchronantriebsmotor 6, insbesondere der Synchronmotor 24, zum leeren Mitlaufen ausgebildet.

In alternativen Ausführungsbeispielen kann der flüssigkeitsgekühlte Synchronantriebsmotor, insbesondere der Synchronmotor, über eine trennbare Kupplung oder einen Freilauf, insbesondere zwischen dem flüssigkeitsgekühlten Synchronantriebsmotor, insbesondere dem Synchronmotor, und dem Verteilergetriebe, mit der Hydraulikpumpenantriebswelle des Hydraulikantriebspumpsystems und/oder mit dem Verbrennungsantriebsmotorsystem verbunden sein, insbesondere falls der flüssigkeitsgekühlte Synchronantriebsmotor, insbesondere der Synchronmotor, nicht zum leeren Mitlaufen ausgebildet sein kann.

Zusätzlich oder alternativ kann in alternativen Ausführungsbeispielen der flüssigkeitsgekühlte Synchronantriebsmotor, insbesondere der Synchronmotor, einen Hohlwellenmotor aufweisen, insbesondere sein. Der Hohlwellenmotor kann auf der Kardanwelle sitzen und zum Antrieb der Kardanwelle ausgebildet sein. Weiter zusätzlich oder alternativ kann in alternativen Ausführungsbeispielen der flüssigkeitsgekühlte Synchronantriebsmotor, insbesondere der Synchronmotor, insbesondere der Hohlwellenmotor, in das Fahrzeuggetriebe, soweit vorhanden, integriert sein.

Wenn im gezeigten Ausführungsbeispiel eine Verschiebewelle 26 des Verteilergetriebes 10 in Fig. 4 nach links verschoben ist, kann das Verbrennungsantriebsmotorsystem 5 die Hydraulikpumpenantriebswelle 4 des Hydraulikantriebspumpsystems 3 antreiben. Eine Welle des flüssigkeitsgekühlten Synchronantriebsmotors 6, insbesondere des Synchronmotors 24, kann leer mitlaufen. Alternativ kann der flüssigkeitsgekühlte Synchronantriebsmotor 6, insbesondere der Synchronmotor 24, zusätzlich die Hydraulikpumpenantriebswelle 4 des Hydraulikantriebspumpsystems 3 antreiben. Die mindestens eine Fahrantriebsachse 9 ist entkoppelt.

Wenn im gezeigten Ausführungsbeispiel die Verschiebewelle 26 des Verteilergetriebes 10 in Fig. 4 nach rechts verschoben ist, kann das Verbrennungsantriebsmotorsystem 5 die mindestens eine Fahrantriebsachse 9 antreiben. Der flüssigkeitsgekühlte Synchronantriebsmotor 6, insbesondere der Synchronmotor 24, kann die Hydraulikpumpenantriebswelle 4 des Hydraulikantriebspumpsystems 3 antreiben. Die Verschiebewelle 26 und eine in Fig. 4 obere Welle, insbesondere die Hydraulikpumpenantriebswelle 4, sind entkoppelt.

Weiter ist der flüssigkeitsgekühlte Synchronantriebsmotor 6, insbesondere der Synchronmotor 24, für eine elektrische Nennleistung P6 von mindestens 60 kW, insbesondere von mindestens 80 kW, ausgebildet. Zusätzlich weist der flüssigkeitsgekühlte Synchronantriebsmotor 6, insbesondere der Synchronmotor 24, eine elektrische Nennleistungsdichte PD6 von mindestens 0,4 kW/kg, insbesondere von mindestens 0,5 kW/kg, auf.

Zudem weist die Autobetonpumpe 1 einen Elektrizitätsnetzanschluss 13 auf. Der Elektrizitätsnetzanschluss 13 ist, insbesondere durch einen Konverter 19, mit dem flüssigkeitsgekühlten Synchronantriebsmotor 6, insbesondere mit dem Synchronmotor 24, elektrisch verbunden. Des Weiteren ist der Elektrizitätsnetzanschluss 13 zum elektrischen Anschluss an einen elektrischen Baustellennetzanschluss 14, insbesondere eines Drehstromnetzes, ausgebildet.

Im Detail weist der Elektrizitätsnetzanschluss 13 einen Netzstecker 20 und ein Stromkabel 21 auf.

Wenn im gezeigten Ausführungsbeispiel der Elektrizitätsnetzanschluss 13 beziehungsweise der elektrische Baustellennetzanschluss 14 den flüssigkeitsgekühlten Synchronantriebsmotor 6, insbesondere den Synchronmotor 24, speist, konvertiert der Konverter 19 Wechselspannung AC zu Gleichspannung DC zu Wechselspannung AC.

Außerdem weist die Autobetonpumpe 1 einen elektrischen Energiespeicher 15 auf. Der elektrische Energiespeicher 15 ist, insbesondere durch den Konverter 19, mit dem flüssigkeitsgekühlten Synchronantriebsmotor 6, insbesondere mit dem Synchronmotor 24, elektrisch verbunden. Weiter ist der elektrische Energiespeicher 15 zur Abgabe elektrischer Leistung P15 an den flüssigkeitsgekühlten Synchronantriebsmotor 6, insbesondere den Synchronmotor 24, ausgebildet.

Wenn im gezeigten Ausführungsbeispiel der elektrische Energiespeicher 15 den flüssigkeitsgekühlten Synchronantriebsmotor 6, insbesondere den Synchronmotor 24, speist, konvertiert der Konverter 19 Gleichspannung DC zu Wechselspannung AC.

Im Detail ist der elektrische Energiespeicher 15 zur Aufnahme von dem flüssigkeitsgekühlten Synchronantriebsmotor 6, insbesondere dem Synchronmotor 24, nicht benötigter elektrischer Leistung Pex von dem Elektrizitätsnetzanschluss 13, insbesondere durch den Konverter 19, elektrisch verbunden und ausgebildet. Zudem ist der elektrische Energiespeicher 15 zur Abgabe von dem flüssigkeitsgekühlten Synchronantriebsmotor 6, insbesondere dem Synchronmotor 24, benötigter elektrischer Leistung P15 zusätzlich zur elektrischen Leistung Pin von dem Elektrizitätsnetzanschluss 13 ausgebildet.

Wenn im gezeigten Ausführungsbeispiel der Elektrizitätsnetzanschluss 13 beziehungsweise der elektrische Baustellennetzanschluss 14 den elektrischen Energiespeicher 15 speist beziehungsweise auflädt, konvertiert der Konverter 19 Wechselspannung AC zu Gleichspannung DC.

Im gezeigten Ausführungsbeispiel weist die Autobetonpumpe 1 den Elektrizitätsnetzanschluss 13 und den elektrischen Energiespeicher 15 auf.

Wie die gezeigten und oben erläuterten Ausführungsbeispiele deutlich machen, stellt die Erfindung eine vorteilhafte Autobetonpumpe bereit, die verbesserte Eigenschaften aufweist. Insbesondere ermöglicht die Autobetonpumpe erstmalig ein effektives Arbeiten mit relativ geringer oder sogar mit Null Abgas-Emission und mit relativ geringerem Geräuschpegel.

## Patentansprüche

1. Autobetonpumpe (1), wobei die Autobetonpumpe (1) aufweist:
- ein Betonpumpsystem (2), wobei das Betonpumpsystem (2) zur Förderung von Beton ausgebildet ist,
- ein Hydraulikantriebspumpsystem (3), wobei das Hydraulikantriebspumpsystem (3) zum Antrieb des Betonpumpsystems (2) ausgebildet ist und eine Hydraulikpumpenantriebswelle (4) aufweist,
- ein Verbrennungsantriebsmotorsystem (5), wobei das Verbrennungsantriebsmotorsystem (5) zum Antrieb der Hydraulikpumpenantriebswelle (4) des Hydraulikantriebspumpsystems (3) ausgebildet ist,
- einen Antriebsmotor (6), wobei der Antriebsmotor (6) zum Antrieb der Hydraulikpumpenantriebswelle (4) des Hydraulikantriebspumpsystems (3) ausgebildet ist, und
- einen elektrischen Energiespeicher (15), insbesondere einen Akkumulator, wobei der elektrische Energiespeicher (15), insbesondere durch einen Konverter (19), mit dem Antriebsmotor (6) elektrisch verbunden ist und zur Abgabe elektrischer Leistung (P15) an den Antriebsmotor (6) ausgebildet ist,
- wobei die Autobetonpumpe (1) dazu ausgebildet ist, den elektrischen Energiespeicher (15) durch den Antriebsmotor (6) als Generator von dem Verbrennungsantriebsmotorsystem (5) aufzuladen,
- **dadurch gekennzeichnet, dass** der Antriebsmotor ein flüssigkeitsgekühlter Synchronantriebsmotor (6) ist und dass die Autobetonpumpe (1) aufweist:
- einen Aufbau (7), wobei der Aufbau (7) das Betonpumpsystem (2) trägt, und
- einen Fahrzeugrahmen (8), wobei der Fahrzeugrahmen (8) den Aufbau (7) trägt,
- wobei der flüssigkeitsgekühlte Synchronantriebsmotor (6) teilweise zwischen Hauptlängsträgern (17) des Aufbaus (7) und/oder des Fahrzeugrahmens (8) räumlich angeordnet ist.

2. Autobetonpumpe (1) nach Anspruch 1, wobei die Autobetonpumpe (1) aufweist:
- mindestens eine Fahrantriebsachse (9), wobei das Verbrennungsantriebsmotorsystem (5) zum Antrieb der mindestens einen Fahrantriebsachse (9) ausgebildet ist.

3. Autobetonpumpe (1) nach Anspruch 2, wobei die Autobetonpumpe (1) aufweist:
- ein Verteilergetriebe (10), wobei das Verteilergetriebe (10) dazu ausgebildet ist, das Verbrennungsantriebsmotorsystem (5) entweder mit der mindestens einen Fahrantriebsachse (9) oder mit der Hydraulikpumpenantriebswelle (4) des Hydraulikantriebspumpsystems (3), insbesondere mechanisch, zu verbinden.

4. Autobetonpumpe (1) nach Anspruch 3,
- wobei das Verbrennungsantriebsmotorsystem (5) mit dem Verteilergetriebe (10) mechanisch verbunden ist, insbesondere mittels einer Kardanwelle (11).

5. Autobetonpumpe (1) nach Anspruch 3 oder 4,
- wobei der flüssigkeitsgekühlte Synchronantriebsmotor (6) mit der Hydraulikpumpenantriebswelle (4) des Hydraulikantriebspumpsystems (3) durch das Verteilergetriebe (10), insbesondere mechanisch, verbunden ist, insbesondere an das Verteilergetriebe (10) direkt angeflanscht ist.

6. Autobetonpumpe (1) nach einem der vorhergehenden Ansprüche,
- wobei der flüssigkeitsgekühlte Synchronantriebsmotor (6) mit der Hydraulikpumpenantriebswelle (4) des Hydraulikantriebspumpsystems (3) mechanisch starr verbunden ist, wobei der flüssigkeitsgekühlte Synchronantriebsmotor (6) auf der Hydraulikpumpenantriebswelle (4) sitzt.

7. Autobetonpumpe (1) nach einem der vorhergehenden Ansprüche,
- wobei der flüssigkeitsgekühlte Synchronantriebsmotor (6) für eine elektrische Nennleistung (P6) von mindestens 60 kW, insbesondere von mindestens 80 kW, ausgebildet ist, und/oder
- wobei der flüssigkeitsgekühlte Synchronantriebsmotor (6) eine elektrische Nennleistungsdichte (PD6) von mindestens 0,4 kW/kg, insbesondere von mindestens 0,5 kW/kg, aufweist.

8. Autobetonpumpe (1) nach einem der vorhergehenden Ansprüche, wobei die Autobetonpumpe (1) aufweist:
- einen Elektrizitätsnetzanschluss (13), wobei der Elektrizitätsnetzanschluss (13), insbesondere durch einen Konverter (19), mit dem flüssigkeitsgekühlten Synchronantriebsmotor (6) elektrisch verbunden ist und zum elektrischen Anschluss an einen elektrischen Baustellennetzanschluss (14) ausgebildet ist.

9. Autobetonpumpe (1) nach Anspruch 8,
- wobei der elektrische Energiespeicher (15) zur Aufnahme von dem flüssigkeitsgekühlten Synchronantriebsmotor (6) nicht benötigter elektrischer Leistung (Pex) von dem Elektrizitätsnetzanschluss (13) elektrisch verbunden und ausgebildet ist, und
- wobei der elektrische Energiespeicher (15) zur Abgabe von dem flüssigkeitsgekühlten Synchronantriebsmotor (6) benötigter elektrischer Leistung (P15) zusätzlich zur elektrischen Leistung (Pin) von dem Elektrizitätsnetzanschluss (13) ausgebildet ist.

10. Autobetonpumpe (1) nach einem der vorhergehenden Ansprüche, wobei die Autobetonpumpe (1) aufweist:
- einen Betonverteilermast (16), wobei der Betonverteilermast (16) zur Verteilung von gefördertem Beton ausgebildet ist,
- wobei das Hydraulikantriebspumpsystem (3) zum Antrieb des Betonverteilermasts (16) ausgebildet ist.

## Claims

1. A vehicle-mounted concrete pump (1), wherein the vehicle-mounted concrete pump (1) comprises:
- a concrete pump system (2), wherein the concrete pump system (2) is designed to convey concrete,
- a hydraulic drive pump system (3), wherein the hydraulic drive pump system (3) is designed to drive the concrete pump system (2) and has a hydraulic pump drive shaft (4),
- a combustion drive motor system (5), wherein the combustion drive motor system (5) is designed to drive the hydraulic pump drive shaft (4) of the hydraulic drive pump system (3),
- a drive motor (6), wherein the drive motor (6) is designed to drive the hydraulic pump drive shaft (4) of the hydraulic drive pump system (3), and
- an electrical energy store (15), in particular an accumulator, wherein the electrical energy store (15) is electrically connected, in particular by means of a converter (19), to the drive motor (6) and is designed to output electrical power (P15) to the drive motor (6),
- wherein the vehicle-mounted concrete pump (1) is designed to charge the electrical energy store (15) by means of the drive motor (6) as generator from the combustion drive motor system (5),
- **characterized in that** the drive motor is a liquid-cooled synchronous drive motor (6) and that the vehicle-mounted concrete pump (1) comprises:
- a superstructure (7), wherein the superstructure (7) carries the concrete pump system (2), and
- a vehicle frame (8), wherein the vehicle frame (8) carries the superstructure (7),
- wherein the liquid-cooled synchronous drive motor (6) is spatially arranged in part between main longitudinal members (17) of the superstructure (7) and/or of the vehicle frame (8).

2. The vehicle-mounted concrete pump (1) as claimed in claim 1, wherein the vehicle-mounted concrete pump (1) comprises:
- at least one driving axle (9), wherein the combustion drive motor system (5) is designed to drive the at least one driving axle (9).

3. The vehicle-mounted concrete pump (1) as claimed in claim 2, wherein the vehicle-mounted concrete pump (1) comprises:
- a transfer case (10), wherein the transfer case (10) is designed to connect, in particular mechanically, the combustion drive motor system (5) either to the at least one driving axle (9) or to the hydraulic pump drive shaft (4) of the hydraulic drive pump system (3).

4. The vehicle-mounted concrete pump (1) as claimed in claim 3,
- wherein the combustion drive motor system (5) is mechanically connected, in particular by means of a cardan shaft (11), to the transfer case (10).

5. The vehicle-mounted concrete pump (1) as claimed in claim 3 or 4,
- wherein the liquid-cooled synchronous drive motor (6) is connected, in particular mechanically, to the hydraulic pump drive shaft (4) of the hydraulic drive pump system (3) by the transfer case (10), in particular is directly flanged onto the transfer case (10).

6. The vehicle-mounted concrete pump (1) as claimed in one of the preceding claims,
- wherein the liquid-cooled synchronous drive motor (6) is mechanically rigidly connected to the hydraulic pump drive shaft (4) of the hydraulic drive pump system (3), wherein the liquid-cooled synchronous drive motor (6) is seated on the hydraulic pump drive shaft (4).

7. The vehicle-mounted concrete pump (1) as claimed in one of the preceding claims,
- wherein the liquid-cooled synchronous drive motor (6) is designed for an electrical rated power (P6) of at least 60 kW, in particular of at least 80 kW, and/or
- wherein the liquid-cooled synchronous drive motor (6) has an electrical rated power density (PD6) of at least 0.4 kW/kg, in particular of at least 0.5 kW/kg.

8. The vehicle-mounted concrete pump (1) as claimed in one of the preceding claims, wherein the vehicle-mounted concrete pump (1) comprises:
- an electricity mains connection (13), wherein the electricity mains connection (13) is electrically connected, in particular by means of a converter (19), to the liquid-cooled synchronous drive motor (6) and is designed for electrical connection to an electrical construction site mains connection (14).

9. The vehicle-mounted concrete pump (1) as claimed in claim 8,
- wherein the electrical energy store (15) is electrically connected and designed to take up electrical power (Pex) not required by the liquid-cooled synchronous drive motor (6) from the electricity mains connection (13), and
- wherein the electrical energy store (15) is designed to output electrical power (P15) required by the liquid-cooled synchronous drive motor (6), in addition to the electrical power (Pin) from the electricity mains connection (13).

10. The vehicle-mounted concrete pump (1) as claimed in one of the preceding claims, wherein the vehicle-mounted concrete pump (1) comprises:
- a concrete distribution boom (16), wherein the concrete distribution boom (16) is designed to distribute conveyed concrete,
- wherein the hydraulic drive pump system (3) is designed to drive the concrete distribution boom (16).

## Revendications

1. Pompe à béton automotrice (1), la pompe à béton automotrice (1) comprenant :
- un système de pompe à béton (2), le système de pompe à béton (2) étant configuré pour transporter du béton,
- un système de pompe d'entraînement hydraulique (3), le système de pompe d'entraînement hydraulique (3) étant configuré pour entraîner le système de pompe à béton (2) et comprenant un arbre d'entraînement de pompe hydraulique (4),
- un système de moteur d'entraînement à combustion (5), le système de moteur d'entraînement à combustion (5) étant configuré pour entraîner l'arbre d'entraînement de pompe hydraulique (4) du système de pompe d'entraînement hydraulique (3),
- un moteur d'entraînement (6), le moteur d'entraînement (6) étant configuré pour entraîner l'arbre d'entraînement de pompe hydraulique (4) du système de pompe d'entraînement hydraulique (3), et
- un réservoir d'énergie électrique (15), notamment un accumulateur, le réservoir d'énergie électrique (15) étant relié électriquement, notamment par un convertisseur (19), au moteur d'entraînement (6) et étant configuré pour délivrer une puissance électrique (P15) au moteur d'entraînement (6),
- dans laquelle la pompe à béton automotrice (1) est configurée pour charger le réservoir d'énergie électrique (15) par le moteur d'entraînement (6) en tant que générateur à partir du système de moteur d'entraînement à combustion (5),
- **caractérisée en ce que** le moteur d'entraînement est un moteur d'entraînement synchrone refroidi par liquide (6) et **en ce que** la pompe à béton automotrice (1) comprend :
- une structure (7), la structure (7) supportant le système de pompe à béton (2), et
- un cadre de véhicule (8), le cadre de véhicule (8) supportant la structure (7),
- le moteur d'entraînement synchrone refroidi par liquide (6) étant partiellement agencé dans l'espace entre les longerons principaux (17) de la structure (7) et/ou du cadre de véhicule (8).

2. Pompe à béton automotrice (1) selon la revendication 1, dans laquelle la pompe à béton automotrice (1) comprend :
- au moins un essieu moteur (9), le système de moteur d'entraînement à combustion (5) étant configuré pour entraîner l'au moins un essieu moteur (9).

3. Pompe à béton automotrice (1) selon la revendication 2, dans laquelle la pompe à béton automotrice (1) comprend :
- une boîte de transfert (10), la boîte de transfert (10) étant configurée pour relier, notamment mécaniquement, le système de moteur d'entraînement à combustion (5) soit à l'au moins un essieu moteur (9), soit à l'arbre d'entraînement de pompe hydraulique (4) du système de pompe d'entraînement hydraulique (3).

4. Pompe à béton automotrice (1) selon la revendication 3,
- dans laquelle le système de moteur d'entraînement à combustion (5) est relié mécaniquement à la boîte de transfert (10), notamment au moyen d'un arbre de cardan (11).

5. Pompe à béton automotrice (1) selon la revendication 3 ou 4,
- dans laquelle le moteur d'entraînement synchrone refroidi par liquide (6) est relié, notamment mécaniquement, à l'arbre d'entraînement de pompe hydraulique (4) du système de pompe d'entraînement hydraulique (3) par la boîte de transfert (10), notamment est directement bridé sur la boîte de transfert (10).

6. Pompe à béton automotrice (1) selon l'une quelconque des revendications précédentes,
- dans laquelle le moteur d'entraînement synchrone refroidi par liquide (6) est relié mécaniquement de manière rigide à l'arbre d'entraînement de pompe hydraulique (4) du système de pompe d'entraînement hydraulique (3), le moteur d'entraînement synchrone refroidi par liquide (6) reposant sur l'arbre d'entraînement de pompe hydraulique (4).

7. Pompe à béton automotrice (1) selon l'une quelconque des revendications précédentes,
- dans laquelle le moteur d'entraînement synchrone refroidi par liquide (6) est configuré pour une puissance électrique nominale (P6) d'au moins 60 kW, notamment d'au moins 80 kW, et/ou
- dans laquelle le moteur d'entraînement synchrone refroidi par liquide (6) présente une densité de puissance électrique nominale (PD6) d'au moins 0,4 kW/kg, notamment d'au moins 0,5 kW/kg.

8. Pompe à béton automotrice (1) selon l'une quelconque des revendications précédentes, la pompe à béton automotrice (1) comprenant :
- une connexion au réseau électrique (13), la connexion au réseau électrique (13) étant reliée électriquement, notamment par un convertisseur (19), au moteur d'entraînement synchrone refroidi par liquide (6) et étant configurée pour la connexion électrique à une connexion au réseau électrique du chantier (14).

9. Pompe à béton automotrice (1) selon la revendication 8,
- dans laquelle le réservoir d'énergie électrique (15) est relié électriquement et configuré pour recevoir la puissance électrique (Pex) non nécessaire au moteur d'entraînement synchrone refroidi par liquide (6) provenant de la connexion au réseau électrique (13), et
- dans laquelle le réservoir d'énergie électrique (15) est configuré pour délivrer la puissance électrique (P15) nécessaire au moteur d'entraînement synchrone refroidi par liquide (6) en plus de la puissance électrique (Pin) provenant de la connexion au réseau électrique (13).

10. Pompe à béton automotrice (1) selon l'une quelconque des revendications précédentes, la pompe à béton automotrice (1) comprenant :
- un mât de distribution de béton (16), le mât de distribution de béton (16) étant configuré pour distribuer du béton transporté,
- dans laquelle le système de pompe d'entraînement hydraulique (3) est configuré pour entraîner le mât de distribution de béton (16).
